# FASCICULE DE BREVET EUROPEEN

(11) **EP 3 216 096 B1**
(45) Date de publication et mention de la délivrance du brevet: **22.02.2023**
(21) Numéro de dépôt: 15793870.5
(22) Date de dépôt: 15.10.2015
(51) Int. Cl.: H02G 3/00

(54) **INSTALLATION ÉLECTRIQUE COMPORANT UN TABLEAU ÉLECTRIQUE ET PLUSIEURS POINTS DE CONNEXION ÉLECTRIQUES**
ELEKTRISCHE INSTALLATION BESTEHEND AUS EINER ELEKTRISCHEN SCHALTTAFEL UND MEHREREN ELEKTRISCHEN ANSCHLUSSPUNKTEN
ELECTRICAL INSTALLATION COMPRISING AN ELECTRICAL PANEL AND SEVERAL ELECTRICAL CONNECTION POINTS

(30) Priorité: 07.11.2014 FR 1460798
(43) Date de publication de la demande: 13.09.2017
(73) Titulaire: Schneider Electric Industries SAS, 92500 Rueil-Malmaison (FR)
(72) Inventeur: PAYET-BURIN, Jean-Luc, F-38050 Grenoble Cedex 09 (FR); VIGOUROUX, Didier, F-38050 Grenoble Cedex 09 (FR)
(74) Mandataire: Schneider Electric
(86) Numéro de dépôt international: PCT/FR2015/052771
(87) Numéro de publication internationale: WO 2016/071599

(56) Documents cités:
- EP-A2- 2 273 635
- WO-A1-2009/056157
- FR-A1- 3 000 310
- US-A- 5 399 806
- US-A1- 2008 013 909
- US-A1- 2011 057 801
- US-B1- 6 309 248
- US-B1- 6 379 164

## Description

### DOMAINE TECHNIQUE

La présente invention concerne une installation électrique comportant un tableau électrique et plusieurs points de connexion électriques destinées à relier électriquement dans un logement, au réseau électrique.

### ETAT DE LA TECHNIQUE ANTERIEURE

Aujourd'hui, un point de connexion électrique est dédié à un usage donné, comme par exemple un point lumineux, une prise, un interrupteur, un détecteur de présence, etc...

Ces points sont figés, et changer leur fonction n'est en règle générale pas envisageable sans l'intervention d'un professionnel, et même dans ce cas, l'électricien préférera installer une nouvelle ligne électrique comportant un nouveau point de connexion électrique.

En outre, dans un logement, on voit souvent apparaître des barrettes de prises ou analogues qui permettent de réaliser des fonctions de type comptage électrique, alimentations DC, prises télécommandées, transmetteurs à courant , porteur, transmetteurs à fil pilote, etc... La réalisation de ces fonctions nécessite donc l'ajout de pièces supplémentaires particulièrement encombrantes et peu esthétiques.

On connaît le document US 6 379 164 décrivant les caractéristiques du préambule de la revendication 1.

### EXPOSE DE L'INVENTION

La présente invention résout ces problèmes et propose un point de connexion électrique pouvant être modifié à loisir suivant le standard local ou la fonction électrique à réaliser.

Ce point de connexion est associé à un départ d'un tableau électrique ou bien à un lieu dans un logement, à des fins de collecte d'informations ou de commande.

A cet effet, la présente invention a pour objet une installation électrique selon la revendication 1.

Ainsi, grâce à l'invention, cette base murale sera installée par l'électricien et ne sera plus démontée quelque soit l'évolutivité souhaitée par l'utilisateur ou l'électricien.

Ce point de connexion sera réalisé de manière à s'adapter au standard local ou bien à un standard nouvellement crée.

Ainsi, l'utilisateur pourra faire évoluer les usages des points de connexion en fonction des besoins et des évolutions techniques. Il disposera d'une plate-forme de raccordement standardisée pour les prises, les commutateurs, les dimmers, les multiprises, les dispositifs permettant de télécommander l'alimentation, d'économiser de l'énergie, de programmer la distribution d'énergie, d'ajouter une connexion en courant porteur, sans compter les différents transformateurs d'alimentation. L'utilisateur pourra donc inclure ces fonctions dans un nouveau type de produit que l'on nomme « point électrique multifonction ».

Selon une caractéristique particulière, ce bloc mural est réalisé de manière à s'adapter à tout type de bloc fonctionnel.

Selon une caractéristique particulière, la fonction assurée par le bloc fonctionnel est l'une des fonctions comprises dans le groupe comprenant un point de commande manuel, une prise électrique communicante ou non, un capteur, un récepteur ou un actionneur.

Selon une autre caractéristique, le point de commande manuel est l'un des éléments compris dans le groupe comprenant un interrupteur, un bouton-poussoir, un bouton rotatif, et un bouton de montée/descente.

Selon une autre caractéristique, la fonction associée à la prise communicante est l'une des fonctions comprises dans le groupe comprenant la surveillance, la commande automatique, et la fonction de mesure des consommations énergétiques.

Selon une autre caractéristique, le capteur est l'un des éléments compris dans le groupe comprenant un capteur de. présence, un capteur de température, un capteur de luminosité, d'humidité ou bien de qualité de l'air.

Selon une autre caractéristique, le récepteur est l'un des éléments compris dans le groupe comprenant l'ambiance musicale, la lumière de veille, les interfaces tactiles, un portier, un buzzer.

Selon une autre caractéristique, le bloc fonctionnel précité peut être commandé localement et/ou à distance depuis un terminal fixe ou portable.

Cette caractéristique permet de réduire le nombre de câbles de commande.

Selon une autre caractéristique, le bloc fonctionnel précité comporte des moyens de communication radio ou CPL ou ethernet avec une box centrale et/ou avec un tableau électrique et/ou un smartphone.

Ceci permet une optimisation de l'installation grâce à un lien entre le tableau et les charges.

Selon une autre caractéristique, ce point de connexion comporte des moyens d'appairage avec un ou plusieurs départs d'un tableau électrique, ou avec un lieu particulier dans le logement précité, à des fins de collecte d'informations ou de commande.

Selon une autre caractéristique, ces moyens d'appairage comportent un codage prévu sur le bloc mural apte à être lu par le bloc fonctionnel.

Selon une réalisation particulière, les éléments de connexion dits premiers comportent des pinces de connexion, tandis que les éléments de connexion dits seconds comportent des broches.

Ceci permet à l'électricien ou à l'utilisateur de réaliser aisément le montage du bloc fonctionnel sur la base murale.

Selon une caractéristique particulière, le bloc fonctionnel est pluggable sur le bloc mural fixe.

Avantageusement, le bloc mural est réalisé à partir d'une prise standard classique dont les éléments de connexion sous forme de broche ont été coupés et remplacés par des pinces de connexion destinées à coopérer avec les éléments de connexion dits seconds du bloc fonctionnel.

Selon une réalisation particulière, le bloc mural est encastré dans un boîtier d'encastrement de l'installation électrique destiné à être fixé dans la paroi murale, ou monobloc avec ce boîtier d'encastrement.

Selon une caractéristique particulière, cette installation comporte des moyens de configuration par l'électricien des fonctions de la distribution électrique du tableau définies à partir de nouvelles application téléchargées à partir d'un magasin informatique.

Selon une autre caractéristique, les fonctions téléchargées précitées sont l'une ou plusieurs des fonctions comprises dans le groupe comprenant la surveillance, l'éclairage ou bien le chauffage.

Selon une autre caractéristique, cette installation comporte des moyens pour consulter à distance les informations relatives à ces fonctions pour un diagnostic à distance, et des moyens de communication d'informations pour un dépannage à distance.

Selon une autre caractéristique, cette installation comporte des moyens de configuration à distance des alertes et/ou d'accès aux alarmes et défauts, ainsi qu'à un historique.

Selon une autre caractéristique, cette installation comporte des moyens de programmation de scénarios adaptés aux habitudes et aux besoins des habitants.

Selon une autre caractéristique cette installation est du type monophasé, triphasé, ou triphasé plus neutre.

### BREVE DESCRIPTION DES DESSINS

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective montrant schématiquement un point de connexion selon l'invention,
- La figure 2 est une vue comportant plusieurs éléments et illustrant la mise en service de plusieurs points de connexion selon l'invention,
- La figure 3 illustre la mise en service de plusieurs points de connexion sur une ligne électrique associée à un départ d'un tableau,
- La figure 4 illustre un mode de disposition des câbles électriques selon l'art antérieur,
- La figure 5 illustre un mode de disposition des câbles avantageux gâce à l'invention,
- La figure 6 est une vue en perspective, illustrant une base murale ainsi qu'un plastron pour une prise, selon une réalisation particulière de l'invention,
- La figure 7 est une vue de dessus de cette base murale,
- La figure 8 est une vue en perspective, illustrant la partie arrière du plastron de la prise précitée,
- La figure 9 est une vue de face dudit plastron de prise,
- La figue 10 est une vue en perspective, illustrant vu de l'arrière, le montage du plastron sur la base murale,
- Les figures 11 et 12 sont respectivement une vue en perspective et une vue de face, montrant la partie avant dudit plastron,
- Les figures 13 et 14 sont respectivement deux vues en perspective montrant la partie arrière dudit plastron,
- Les figures 15 à 17 sont respectivement une vue en perspective de la base murale vue de l'arrière, une vue de face vu de l'avant de ladite base, et une vue en perspective de la base montrant sa partie intérieure,
- La figure 18 est une vue en perspective comportant un arraché et illustrant le montage du plastron de prise sur la base murale,
- Les figures 19 à 22 sont quatre illustrations montrant la mise en service d'un élément fonctionnel destiné à mesurer la consommation électrique,
- Les figures 23 à 25 illustrent la mise en place et l'utilisation d'éléments fonctionnels prenant la forme respectivement d'un babyphone pour la figure 23, d'un thermostat, d'une prise, d'un détecteur de mouvements pour la figure 24, d'un module d'émission de son et d'un module destiné à émettre de la lumière pour la figure 25, et
- La figure 26 illustre la gestion par l'utilisateur de ces deux éléments respectivement d'émission de son et d'émission de lumière.

### EXPOSE DETAILLE DE PLUSIEURS MODES DE REALISATION.

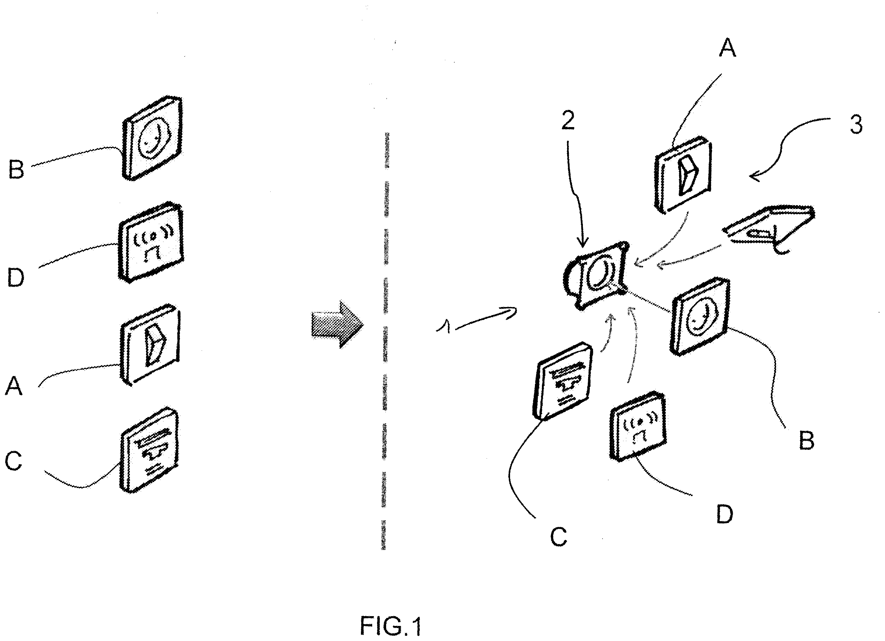

Sur la figure 1, un point de connexion 1 selon l'invention comporte un bloc ou une base murale 2 constitué principalement par un socle destiné à être monté fixement dans une paroi murale et comportant des éléments de connexion, dits premiers (non visibles sur les figures) destinées à être reliées électriquement aux parties correspondantes du réseau électrique. Dans cette réalisation particulière illustrée, ces éléments de connexion sont associés respectivement à une phase, le neutre et la terre, le réseau étant monophasé.

Ce bloc mural 2 est destiné à recevoir un élément dit bloc fonctionnel 3, lequel est destiné à assurer une fonction électrique particulière. On peut classer ces blocs fonctionnels en plusieurs catégories telles que par exemple, les points de commandes manuels A, les prises électriques 13, communicantes ou non, les capteurs C, les récepteurs D. Ces blocs fonctionnels 3 sont interchangeables par l'utilisateur ou l'électricien selon le type de fonction électrique qui doit être assurée.

Ainsi, ce point de commande manuel pourra prendre la forme d'un interrupteur, d'un bouton poussoir, d'un bouton rotatif, d'une montée/descente, etc...

Les prises électriques communicantes pourront assurer par exemple une fonction de surveillance, de commande automatique, de mesure des consommations énergétiques, etc....

Les capteurs pourront détecter une présence, une température, une luminosité, l'humidité, la qualité de l'air...

Les récepteurs pourront par exemple réaliser une ambiance musicale, une lumière de veille, constituer des interfaces tactiles, assurer la fonction de portier, de buzzer etc...

On notera que cette base murale est universelle en ce sens qu'elle s'adapte au plus grand nombre de blocs fonctionnels pouvant être utilisés. Les deux éléments à savoir le bloc mural et le bloc fonctionnel sont réalisés de manière à être conformes au standard existant, ou pourront être réalisés de manière à s'adapter à un nouveau standard si un nouveau standard devait être utilisé.

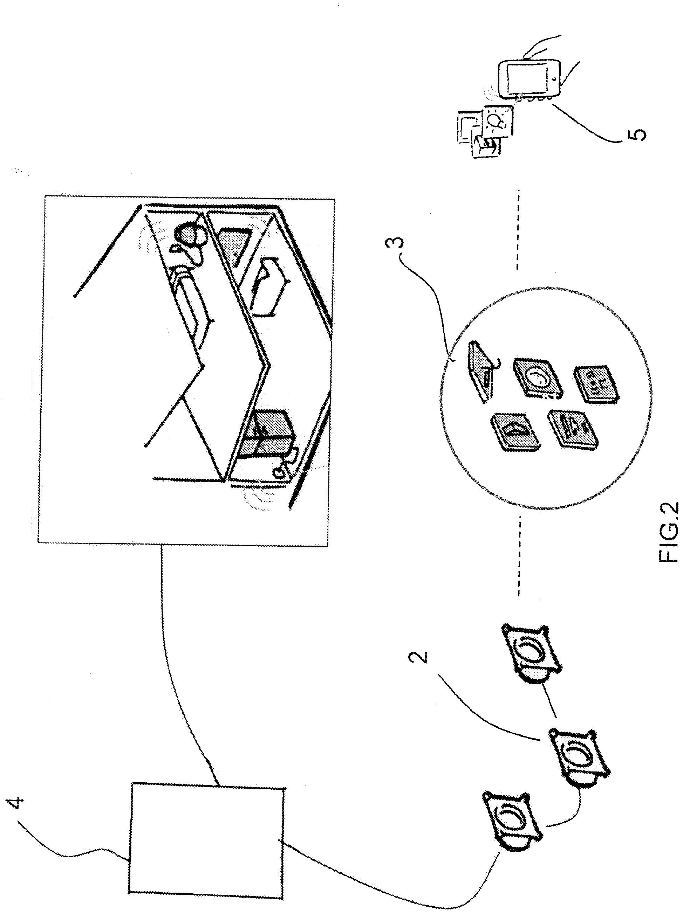

Sur la figure 2, une installation électrique selon l'invention comporte plusieurs blocs muraux universels 2 destinés à être répartis dans différentes pièces d'un logement, et destinés à recevoir chacun un bloc fonctionnel 3, ces blocs fonctionnels 3 étant interchangeables. Cette installation comporte également un tableau de distribution électrique 4.

Cette installation électrique peut évoluer et être configurée, contrôlée, pilotée en temps réel via un ordinateur fixe ou mobile, avantageusement un smartphone 5.

Ainsi, en fonctionnement, l'électricien configure les fonctions de la distribution électrique du tableau 4 en téléchargeant de nouvelles applications dans un « digital store », ces applications permettant d'assurer des fonctions de surveillance, d'éclairage, de chauffage, etc.

En cas de panne, l'électricien peut consulter à distance des informations, conseiller et diagnostiquer à distance, dépanner à distance, etc.

L'habitant contrôle à distance ses dépenses énergétiques, ses radiateurs, la VMC, le cumulus électrique, les lampes et autres appareils électriques, la sécurité de son habitat et de sa famille.

L'habitant configure les alertes, et à distance, accède aux alarmes et défauts, ainsi qu'à un historique.

Des scénarios peuvent être programmés et adaptés aux habitudes et aux besoins, comme par exemple le passage du chauffage en mode économique lorsque l'utilisateur quitte son habitat, l'ouverture des volets à son réveil, un scénario pour le week-end différent d'un scénario du reste de la semaine.

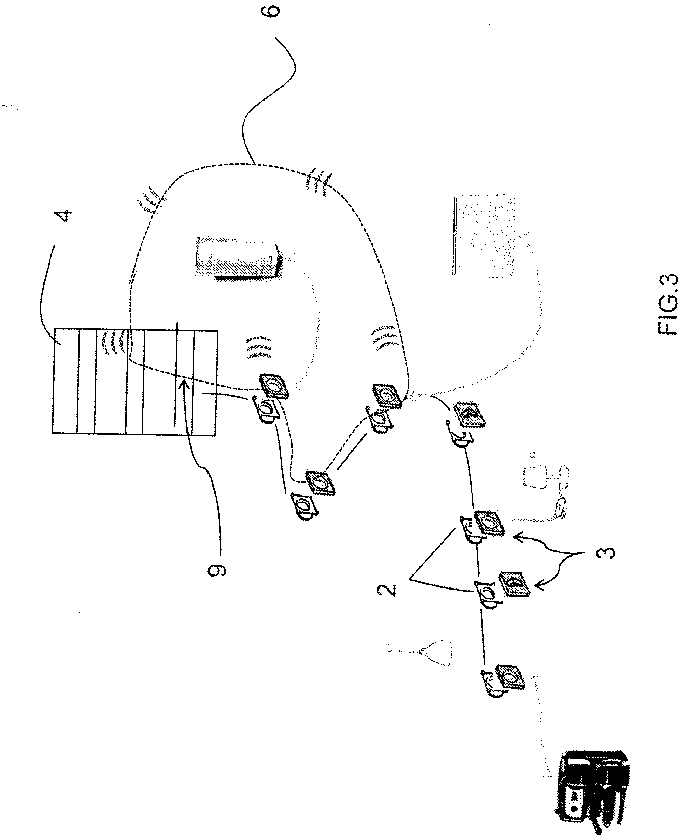

Sur la figure 3, l'on voit qu'il est possible grâce à l'invention, de réaliser une boucle électrique de délestage capillaire 6.

Ceci est rendu possible par le fait que le bloc mural 2 comporte un codage 7 apte à coopérer avec un codage correspondant appartenant au bloc fonctionnel, ce codage étant associé à un départ 9 du tableau électrique 4. Ainsi, toute une ligne peut être codée. Ce codage peut être lu sur la base murale universelle 2, puis une communication radiofréquence par exemple Zigbee, ou CPL, peut être établie entre le bloc fonctionnel correspondant 3 et le tableau 4. Il est ainsi possible de réaliser un délestage en fonction des besoins de l'utilisateur et de la distribution électrique.

Cette possibilité de réaliser un délestage permet de maximiser le courant qui circule réellement dans le câble d'un départ.

En effet, ce délestage capillaire permet de multiplexer les intensités utilisées par les charges importantes.

Il permet également d'augmenter le nombre de points de charge par départ que peut contrôler le tableau.

Il permet également de mélanger des points lumineux, des prises, des interrupteurs, et des capteurs sur un même départ.

Il permet également d'alerter et de délester selon les priorités de l'utilisateur.

Il permet également de supprimer tous les câblages de commande (Va et vient, retour) et de réduire le nombre de départ spécifique charge (VMC, frigo, machine à laver, chauffe eau.....).

Ce raisonnement s'applique aussi sur les courants de fuite et permet sur un même départ de délester les charges en fonction de leur courant de fuite si besoin.

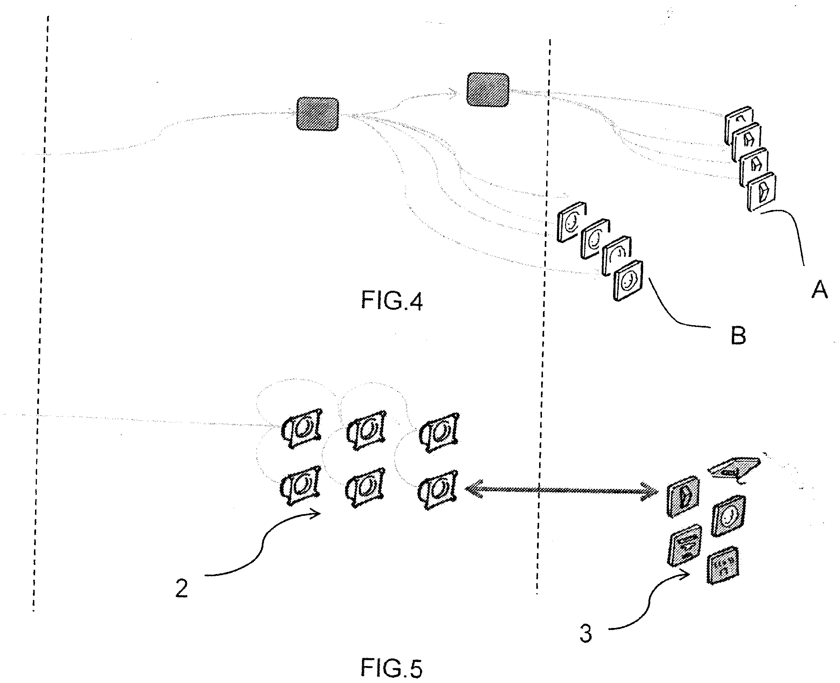

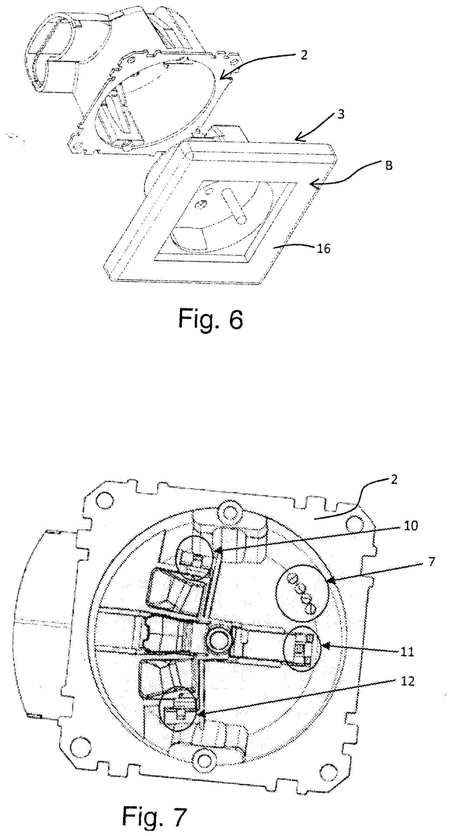

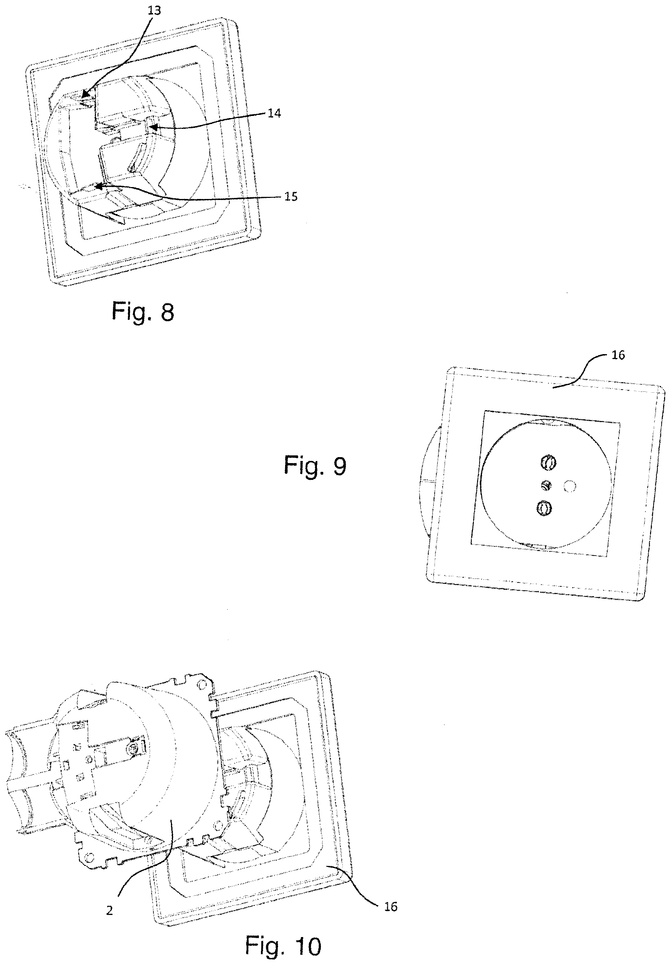

Le système de communication radio ou CPL et l'universalité du bloc mural permettent de passer d'un mode de câblage de type pieuvre tel qu'illustré sur la figure 4, à un mode de câblage du type « chaînée » tel qu'illustré sur la figure 5, ce qui permet d'obtenir une diminution considérable du nombre de câbles utilisés. Sur les figures 6 à 14 a été représentée une réalisation particulière d'un point de connexion selon l'invention, dans laquelle le bloc mural 2 est destiné à être installé dans la paroi murale en lieu et place d'une boîte d'encastrement classique.

Dans cette réalisation particulière, le bloc fonctionnel 3 est une prise classique.

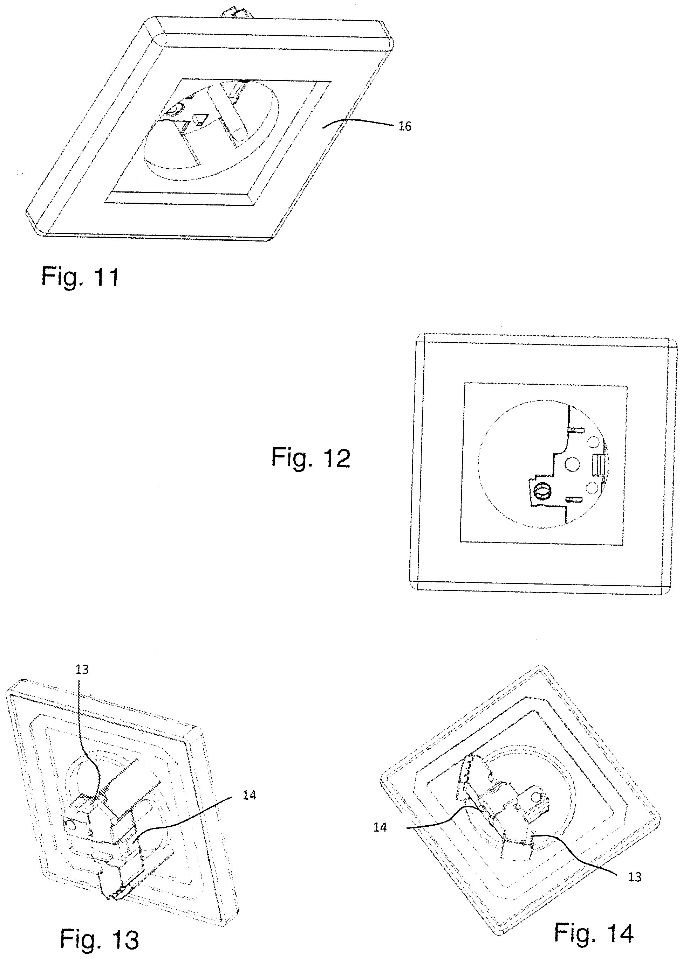

Ce bloc mural 2 est formé par un bloc comportant une partie évidée au fond de laquelle sont fixés des éléments de connexion dits premiers 10,11,12, destinés à être reliés électriquement aux éléments de connexion électriques correspondants du réseau électrique. Ces éléments de connexion dits premiers 10,11,12 se présentent, dans cette réalisation particulière, sous la forme de pinces de connexion destinées à recevoir des éléments de connexion sous la forme de broches 13,14,15 prévus sur la prise, lors de la fixation de la prise sur le bloc mural, cette fixation permettant de réaliser le raccordement électrique de ces broches de la prise avec les éléments de connexion correspondants du réseau représentant respectivement une phase, le neutre et la terre dans un réseau monophasé. Grâce à ces pinces de connexion, le bloc fonctionnel 3 est pluggué sur la base murale 2. Les figures 11 à 14 illustrent plus particulièrement le plastron 16 de la prise comportant les broches précitées.

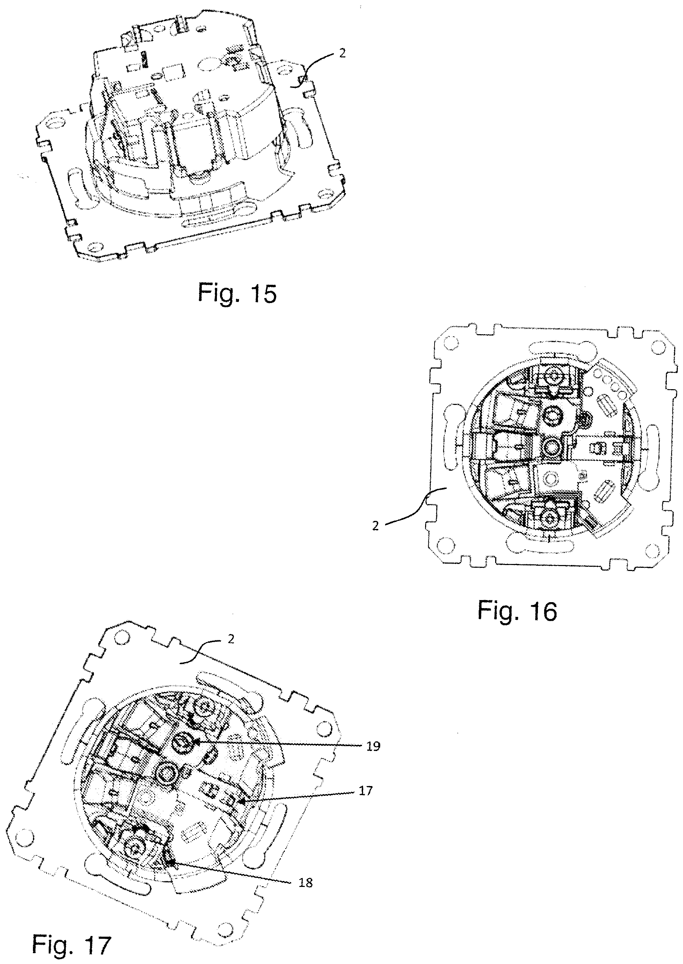

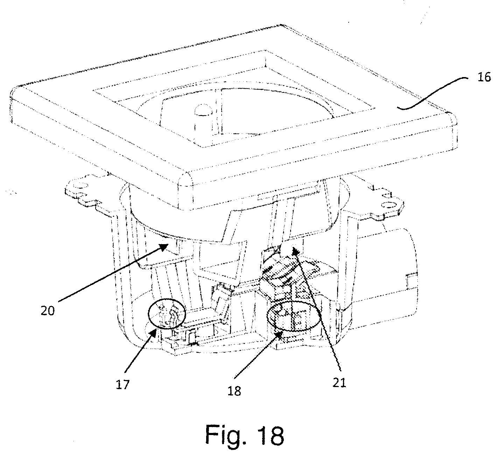

Sur les figures 15 à 18 a été représentée une réalisation dans laquelle le bloc mural 2 a été intégré dans un boîtier d'encastrement existant 31.

Dans ce cas, le bloc mural 2 comporte deux pinces de connexion 17,18, la broche de neutre 19 étant déjà intégrée dans le bloc mural 2 et traversera directement la prise 3, ces deux pinces 17,18 étant destinées à coopérer avec deux broches 20,21 de la prise 3.

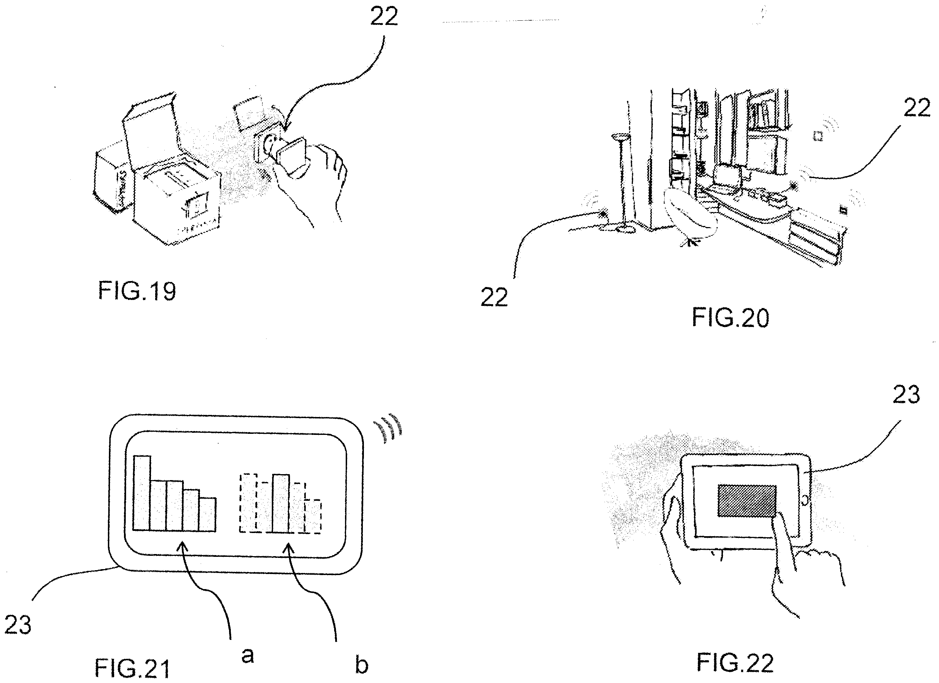

Le fonctionnement de plusieurs points de connexion selon l'invention va être décrit dans ce qui suit en référence aux figures 19 à 26.

Sur la figure 19, l'utilisateur reçoit les modules 22 de mesure de la consommation qu'il a commandés dans un digital store. Puis, il les installe dans les chambres de ses enfants. Après avoir activé ces modules, il télécharge l'application appropriée sur une tablette 23. A partie de cette tablette, deux membres de la famille peuvent comparer leurs consommations énergétiques respectives a,b de la semaine.

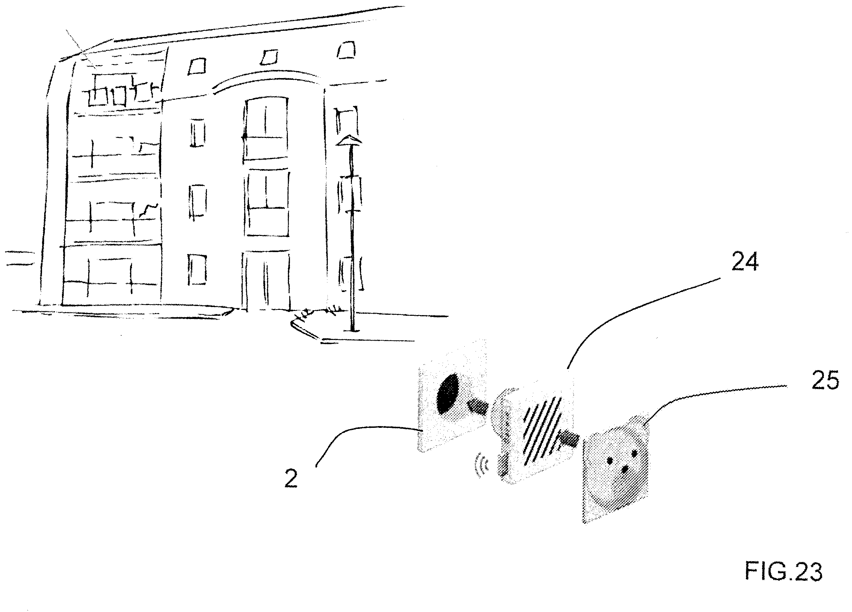

Sur la figure 23, un utilisateur a installé un module 24 ayant la fonction babyphone commandé en ligne, dans la chambre d'un enfant et un autre dans la cuisine. Puis, il a imprimé en 3D, un motif décoratif 25 qu'il a pu fixer sur le module de manière à personnaliser son module. Après quoi, il a installé l'application appropriée sur son smartphone, et peut alors commander son baby phone à distance.

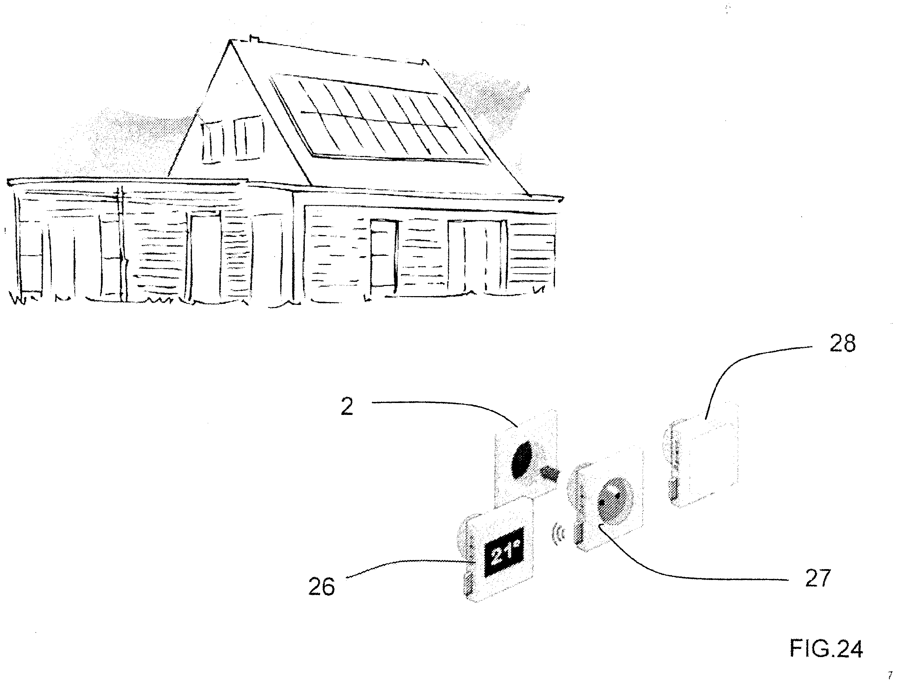

Sur la figure 24, ce sont un module thermostat 26, une prise 27 et un module de détection de mouvement 28 qui ont été installés.

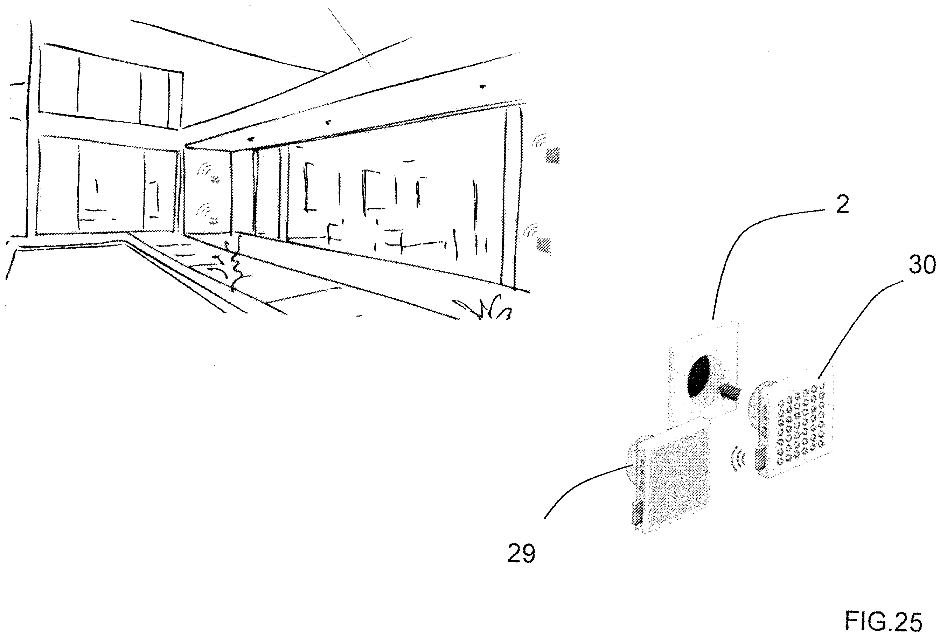

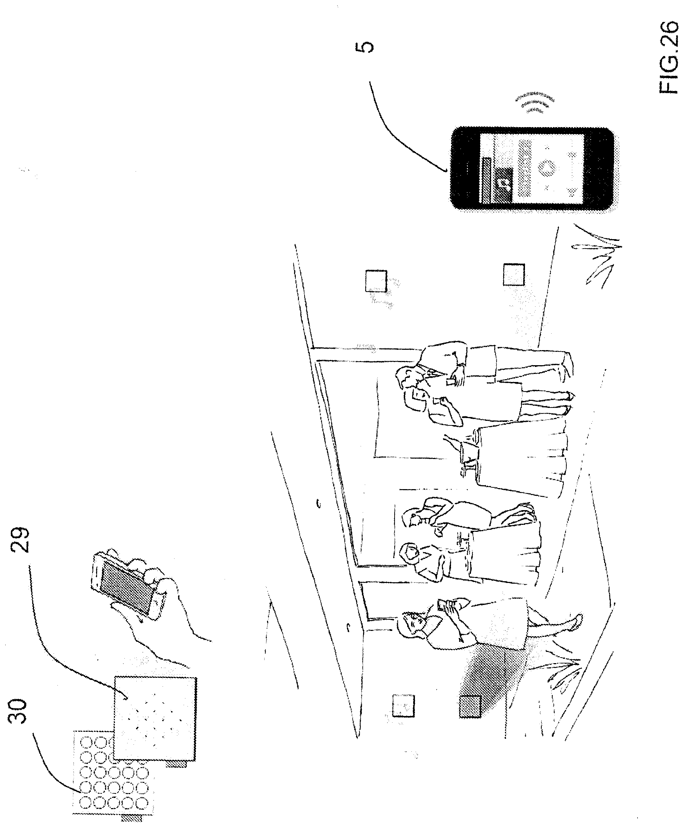

Sur la figure 25, ce sont un module de production de son 29 et un module de production de lumière 30 qui ont été installés. Et, sur la figure 26, l'utilisateur commande ces deux modules 29,30 à distance au moyen d'un smartphone 5.

On a créé grâce à l'invention, une nouvelle interface entre le monde professionnel de l'électricien et le consommateur.

Ce point est installé par l'électricien et ne sera plus démonté quelque soit l'évolutivité qu'il recevra. Ce point est réalisé de manière à respecter exactement les règles et habitudes en vigueur. Ce point permet de réaliser soit les fonctions de prise classique, soit des fonctions plus évoluées telles que la mesure ou le délestage, ou tout autre fonction telle que celle de thermostat, de détecteur de présence, de détecteur de gaz, d'alimentation 5V, etc...II peut dialoguer en radio avec une box centrale et peut s'associer avec un départ du tableau.

La base murale universelle a été conçue de manière à porter un codage en dur soit mécanique, soit électronique, soit par soft. Ce codage sera lu par les éléments fonctionnels qui viennent se plugger sur le point électrique. Ce codage est démontable ou paramétrable par un outil ou par démontage du point électrique.

Le système fonctionnel est facilement installable par une personne non avertie. Les éléments fonctionnels qui viennent se plugger peuvent être très simples et ne réaliser que la fonction prise standard. Ils peuvent être plus évolués et réaliser une fonction autonome telle qu'une tempo horaire programmable, ou bien ils peuvent communiquer en radio, CPL ou autre média avec le tableau, et sont un élément clé d'un système qui permet de réaliser des fonctions beaucoup plus évoluées. Ils permettent d'assurer le lien entre la distribution électrique, les charges et le consommateur.

Les avantages liés à l'invention du point de vue du tableautier, sont qu'il peut personnaliser à la dernière minute son installation, et peut vendre des fonctionnalités supplémentaires sans destruction du matériel existant.

Il peut corriger d'éventuelles erreurs directement sur site. Le temps de déplacement chez le distributeur est diminué. Le temps de montage des éléments tels que les prises, lampes etc...est diminué.

L'invention permet également d'optimiser le stock de matériel, de diminuer le temps entre l'achat du matériel et son paiement.

L'habitant peut personnaliser son confort en fonction de ses propres besoins et de son style de vie, faire évoluer son habitat en fonction de ses phases de vie.

L'invention n'est pas limitée aux modes de réalisation décrits et illustrés qui n'ont été donnés qu'à titre d'exemple.

C'est ainsi que l'un ou plusieurs des éléments fonctionnels peut être un actionneur, un dimmer, une horloge temporisée, etc.....

## Revendications

1. Installation électrique comportant un tableau électrique et plusieurs points de connexion électriques destinés à relier électriquement une charge électrique dans un logement, au réseau électrique, ces points de connexion comportant une première partie (2) dite bloc mural, comportant des éléments de connexion dits premiers, ce bloc mural étant destiné à être monté fixement dans une paroi murale du logement de manière que les éléments de connexion dits premiers soient reliés électriquement aux partie correspondantes du réseau, et une seconde partie (3) dite bloc fonctionnel, destinée à assurer une fonction électrique particulière et comportant des éléments de raccordement dits seconds, le bloc mural précité étant destiné à être mise en place de manière définitive par l'électricien, tandis que ce bloc fonctionnel (3) est apte à être fixé de manière amovible dans le bloc mural (2) par un consommateur ou un électricien, cette fixation entraînant le raccordement électrique des éléments de connexion dits seconds aux parties correspondantes du réseau par l'intermédiaire des éléments de connexion dits premiers de manière à permettre la mise en service de la fonction électrique précitée, ce bloc fonctionnel étant interchangeable, par le consommateur ou l'électricien, avec un autre bloc fonctionnel, en ce que chaque bloc mural est apte à recevoir un bloc fonctionnel comportant des moyens de communication avec une box centrale et/ou un tableau électrique et /ou un ordinateur fixe ou mobile, les éléments de connexion dits premiers comportent des pinces de connexion (10, 11, 12) (17, 18) et les éléments de connexion dits seconds (13, 14, 15) (20, 21) comportent des broches, le bloc fonctionnel (3) est pluggable sur le bloc mural fixe (2) par l'intermédiaire des pinces précitées coopérant avec les broches précitées,**caractérisée en ce que** ce bloc mural et ce bloc fonctionnel comportent chacun des moyens d'appairage (7) propres à permettre l'appairage du point de connexion (1) avec le tableau électrique (4) à des fins de collecte d'informations ou de commande, **en ce que** ce bloc mural (2) comporte un codage (7) apte à être lu par le bloc fonctionnel (3), ce codage (7) étant associé à un départ (9) du tableau électrique (4).

2. Installation électrique selon la revendication 1, **caractérisée en ce que** le bloc mural (2) est réalisé de manière à s'adapter à tout type de bloc fonctionnel (3).

3. Installation électrique selon la revendication 1 ou 2, **caractérisée en ce que** la fonction assurée par le bloc fonctionnel (3) est l'une des fonctions comprises dans le groupe comprenant un point de commande manuel A, une prise électrique B communicante ou non, un capteur C ou un récepteur D, un actionneur.

4. Installation électrique selon la revendication 3, **caractérisée en ce que** le point de commande manuel A est l'un des éléments compris dans le groupe comprenant un interrupteur, un bouton-poussoir, un bouton rotatif, et un bouton de montée/descente.

5. Installation électrique selon la revendication 3 ou 4, **caractérisée en ce que** la fonction associée à la prise communicante B est l'une des fonctions comprises dans le groupe comprenant la surveillance, la commande automatique, et la fonction de mesure des consommations énergétiques.

6. Installation électrique selon la revendication 3,4 ou 5, **caractérisée en ce que** le capteur C est l'un des éléments compris dans le groupe comprenant un capteur de présence, un capteur de température, un capteur de luminosité, d'humidité ou bien de qualité de l'air.

7. Installation électrique selon l'une quelconque des revendications 3 à 6, **caractérisée** en ce le récepteur D est l'un des éléments compris dans le groupe comprenant l'ambiance musicale, la lumière de veille, les interfaces tactiles, un portier, un buzzer.

8. Installation électrique selon l'une quelconque des revendications précédentes, **caractérisée en ce que** le bloc fonctionnel précité (3) peut être commandé localement et/ou à distance depuis un terminal fixe ou portable (5).

9. Installation électrique selon l'une quelconque des revendications précédentes, **caractérisée en ce que** le bloc fonctionnel précité (3) comporte des moyens de communication radio ou CPL ou ethernet avec une box centrale et/ou avec le tableau électrique et/ou un smartphone (5).

10. Installation électrique selon l'une quelconque des revendications précédentes, **caractérisé en ce que** le bloc mural (2) est réalisé à partir d'une prise standard classique dont les éléments de connexion sous forme de broche ont été coupés et remplacés par des pinces de connexion destinées à coopérer avec les éléments de connexion dits seconds du bloc fonctionnel.

11. Installation électrique selon l'une quelconque des revendications précédentes, **caractérisé en ce que** le bloc mural (2) est encastré dans un boîtier d'encastrement (31) de l'installation électrique destiné à être fixé dans la paroi murale, ou monobloc avec ce boîtier d'encastrement (31).

12. Installation électrique selon l'une quelconque des revendications précédentes, **caractérisée en ce qu'**elle comporte le tableau de distribution électrique, et des moyens (5) de contrôle et/ou pilotage à distance de la (des) fonction(s) associée(s) à ce(s) bloc(s) fonctionnel(s) (3), par l'électricien ou l'habitant, par l'intermédiaire du tableau électrique (4), d'une boîte dédiée dans le bâtiment, ou directement.

13. Installation selon la revendication 12, 44- **caractérisée en ce qu'**elle comporte des moyens de configuration par l'électricien des fonctions de la distribution électrique du tableau définies à partir de nouvelles applications téléchargées à partir d'un magasin informatique.

14. Installation selon la revendication 13. **caractérisée en ce que** les fonctions téléchargées précitées sont l'une ou plusieurs des fonctions comprises dans le groupe comprenant la surveillance, l'éclairage ou bien le chauffage.

15. Installation électrique selon la revendication 13 ou 14, **caractérisée en ce qu'**elle comporte des moyens pour consulter à distance les informations relatives à ces fonctions pour un diagnostic à distance, et des moyens de communication d'informations pour un dépannage à distance.

16. Installation électrique selon l'une quelconque des revendications 13 à 15, **caractérisée en ce qu'**elle comporte des moyens de configuration à distance des alertes et/ou d'accès aux alarmes et défauts, ainsi qu'à un historique.

17. Installation électrique selon l'une quelconque des revendications 13 à 16, **caractérisée en ce qu'**elle comporte des moyens de programmation de scénarios adaptés aux habitudes et aux besoins des habitants.

18. Installation électrique selon l'une quelconque des revendications précédentes, **caractérisée en ce qu'**elle est du type monophasé, triphasé, ou triphasé plus neutre.

## Patentansprüche

1. Elektrische Installation, die eine elektrische Schalttafel und mehrere elektrische Anschlusspunkte, die dazu bestimmt sind, eine elektrische Last in einer Wohnung mit dem elektrischen Netz elektrisch zu verbinden, umfasst, wobei diese Anschlusspunkte Folgendes umfassen: einen als Wandbaustein bezeichneten ersten Teil (2), der sogenannte erste Anschlusselemente umfasst, wobei dieser Wandbaustein dazu bestimmt ist, fest in einer Wand der Wohnung montiert zu sein, sodass die sogenannten ersten Anschlusselemente mit den entsprechenden Teilen des Netzes elektrisch verbunden sind, und einen als Funktionsbaustein bezeichneten zweiten Teil (3), der dazu bestimmt ist, eine bestimmte elektrische Funktion zu erfüllen, und sogenannte zweite Verbindungselemente umfasst, wobei der vorgenannte Wandbaustein dazu bestimmt ist, durch den Elektriker dauerhaft eingebaut zu werden, während dieser Funktionsbaustein (3) dazu geeignet ist, durch einen Verbraucher oder einen Elektriker lösbar in dem Wandbaustein (2) befestigt zu werden, wobei dieses Befestigen das elektrische Verbinden der sogenannten zweiten Anschlusselemente mit den entsprechenden Teilen des Netzes mittels der sogenannten ersten Anschlusselemente bewirkt, um die Inbetriebnahme der vorgenannten elektrischen Funktion zu gestatten, wobei dieser Funktionsbaustein durch den Verbraucher oder den Elektriker gegen einen anderen Funktionsbaustein ausgetauscht werden kann, dass jeder Wandbaustein dazu geeignet ist, einen Funktionsbaustein aufzunehmen, der Mittel zur Kommunikation mit einer zentralen Box und/oder einer elektrischen Schalttafel und/oder einem festen oder beweglichen Computer umfasst, die sogenannten ersten Anschlusselemente Anschlussklemmen (10, 11, 12) (17, 18) umfassen und die sogenannten zweiten Anschlusselemente (13, 14, 15) (20, 21) Stifte umfassen, der Funktionsbaustein (3) mittels der vorgenannten Klemmen, die mit den vorgenannten Stiften zusammenwirken, in den festen Wandbaustein (2) eingesteckt werden kann, **dadurch gekennzeichnet, dass** dieser Wandbaustein und dieser Funktionsbaustein jeweils Kopplungsmittel (7) umfassen, um das Koppeln des Anschlusspunkts (1) mit der elektrischen Schalttafel (4) zwecks des Sammelns von Informationen oder der Steuerung zu gestatten, dass dieser Wandbaustein (2) eine Codierung (7) umfasst, die dazu geeignet ist, von dem Funktionsbaustein (3) gelesen zu werden, wobei diese Codierung (7) mit einem Abgang (9) der elektrischen Schalttafel (4) assoziiert ist.

2. Elektrische Installation nach Anspruch 1, **dadurch gekennzeichnet, dass** der Wandbaustein (2) so hergestellt ist, dass er sich an jede Art von Funktionsbaustein (3) anpasst.

3. Elektrische Installation nach Anspruch 1 oder 2, **dadurch gekennzeichnet, dass** die Funktion, die der Funktionsbaustein (3) erfüllt, eine der Funktionen ist, die in der Gruppe enthalten sind, die einen manuellen Steuerpunkt A, eine elektrische Steckdose B, die kommunikationsfähig ist oder nicht, einen Sensor C oder einen Empfänger D, einen Betätiger beinhaltet.

4. Elektrische Installation nach Anspruch 3, **dadurch gekennzeichnet, dass** der manuelle Steuerpunkt A eines der Elemente ist, die in der Gruppe enthalten sind, die einen Schalter, einen Drucktaster, einen Drehknopf und einen Auf/Ab-Schalter beinhaltet.

5. Elektrische Installation nach Anspruch 3 oder 4, **dadurch gekennzeichnet, dass** die Funktion, die mit der kommunikationsfähigen Steckdose B assoziiert ist, eine der Funktionen ist, die in der Gruppe enthalten sind, die das Überwachen, das automatische Steuern und die Funktion des Messens der Energieverbräuche beinhaltet.

6. Elektrische Installation nach Anspruch 3, 4 oder 5, **dadurch gekennzeichnet, dass** der Sensor C eines der Elemente ist, die in der Gruppe enthalten sind, die einen Anwesenheitssensor, einen Temperatursensor, einen Helligkeits-, Feuchtigkeits- oder Luftqualitätssensor beinhaltet.

7. Elektrische Installation nach einem beliebigen der Ansprüche 3 bis 6, **dadurch gekennzeichnet, dass** der Empfänger D eines der Elemente ist, die in der Gruppe enthalten sind, die musikalisches Ambiente, Stimmungslicht, taktile Schnittstellen, einen Türöffner, einen Buzzer beinhaltet.

8. Elektrische Installation nach einem beliebigen der vorhergehenden Ansprüche, **dadurch gekennzeichnet, dass** der vorgenannte Funktionsbaustein (3) lokal und/oder aus der Ferne von einem festen und/oder tragbaren Endgerät (5) aus gesteuert werden kann.

9. Elektrische Installation nach einem beliebigen der vorhergehenden Ansprüche, **dadurch gekennzeichnet, dass** der vorgenannte Funktionsbaustein (3) Mittel zur Funk- oder Powerline- oder Ethernetkommunikation mit einer zentralen Box und/oder mit der elektrischen Schalttafel und/oder einem Smartphone (5) umfasst.

10. Elektrische Installation nach einem beliebigen der vorhergehenden Ansprüche, **dadurch gekennzeichnet, dass** der Wandbaustein (2) auf Basis einer klassischen Standardsteckdose hergestellt ist, deren stiftförmige Anschlusselemente abgetrennt und durch Anschlussklemmen ersetzt wurden, die dazu bestimmt sind, mit den sogenannten zweiten Anschlusselementen des Funktionsbausteins zusammenzuwirken.

11. Elektrische Installation nach einem beliebigen der vorhergehenden Ansprüche, **dadurch gekennzeichnet, dass** der Wandbaustein (2) in ein Einlassgehäuse (31) der elektrischen Installation, das dazu bestimmt ist, in der Wand befestigt zu sein, eingelassen ist oder mit diesem Einlassgehäuse (31) einstückig ausgebildet ist.

12. Elektrische Installation nach einem beliebigen der vorhergehenden Ansprüche, **dadurch gekennzeichnet, dass** sie die Schalttafel zur elektrischen Verteilung und Mittel (5) zur Steuerung und/oder Fernansteuerung der einen oder der mehreren Funktionen, die mit diesem einen oder diesen mehreren Funktionsbausteinen (3) assoziiert sind, durch den Elektriker oder den Bewohner mittels der elektrischen Schalttafel (4), eines im Gebäude zu diesem Zweck vorgesehenen Kastens oder direkt umfasst.

13. Installation nach Anspruch 12, **dadurch gekennzeichnet, dass** sie Mittel zur Konfiguration, durch den Elektriker, der Funktionen der elektrischen Verteilung der Schalttafel, die auf Basis von neuen Anwendungen, die aus einem EDV-Shop heruntergeladen werden, definiert werden, umfasst.

14. Installation nach Anspruch 13, **dadurch gekennzeichnet, dass** die vorgenannten heruntergeladenen Funktionen eine oder mehrere der Funktionen sind, die in der Gruppe enthalten sind, die das Überwachen, das Beleuchten oder das Heizen beinhaltet.

15. Elektrische Installation nach Anspruch 13 oder 14, **dadurch gekennzeichnet, dass** sie Mittel zum Fernabrufen der Informationen über diese Funktionen zwecks einer Ferndiagnose und Mittel zur Übermittlung von Informationen zwecks einer Fehlerbehebung aus der Ferne umfasst.

16. Elektrische Installation nach einem beliebigen der Ansprüche 13 bis 15, **dadurch gekennzeichnet, dass** sie Mittel zur Fernkonfiguration der Warnmeldungen und/oder für den Zugang zu Alarmen und Fehlern sowie zu einem Verlauf umfasst.

17. Elektrische Installation nach einem beliebigen der Ansprüche 13 bis 16, **dadurch gekennzeichnet, dass** sie Mittel zur Programmierung von Szenarien umfasst, die an die Gewohnheiten und Bedürfnisse der Bewohner angepasst sind.

18. Elektrische Installation nach einem beliebigen der vorhergehenden Ansprüche, **dadurch gekennzeichnet, dass** sie vom einphasigen Typ, dreiphasigen Typ oder dreiphasigen Typ plus Neutralleiter ist.

## Claims

1. Electrical installation comprising an electrical switchboard and a plurality of electrical connection points intended to electrically link an electrical load in a dwelling to the electrical network, these connection points comprising a first part (2) called wall block comprising so-called first connection elements, this wall block being intended to be fixatedly mounted in a wall of the dwelling in such a way that the so-called first connection elements are electrically linked to the corresponding parts of the network, and a second part (3) called functional block intended to provide a particular electrical function and comprising so-called second connection elements, the aforementioned wall block being intended to be fitted definitively by the electrician, whereas this functional block (3) is suitable for being fixed removably in the wall block (2) by a consumer or an electrician, this fixing leading to the electrical connection of the so-called second connection elements to the corresponding parts of the network via the so-called first connection elements, in such a way as to allow the aforementioned electrical function to be activated, this functional block being interchangeable, by the consumer or the electrician, with another functional block, in that each wall block is able to receive a functional block comprising means for communication with a central box and/or an electrical switchboard and/or a fixed or mobile computer, the so-called first connection elements comprise connection clips (10, 11, 12) (17, 18) and the so-called second connection elements (13, 14, 15) (20, 21) comprise pins, the functional block (3) is pluggable onto the fixed wall block (2) via the aforementioned clips interacting with the aforementioned pins, **characterized in that** this wall block and this functional block each comprise pairing means (7) suitable for enabling pairing of the connection point (1) with the electrical switchboard (4) for information collection or control purposes, **in that** this wall block (2) comprises coding (7) able to be read by the functional block (3), this coding (7) being associated with a feeder (9) of the electrical switchboard (4).

2. Electrical installation according to Claim 1, **characterized in that** the wall block (2) is implemented in such a way as to adapt to any type of functional block (3).

3. Electrical installation according to Claim 1 or 2, **characterized in that** the function provided by the functional block (3) is one of the functions included in the group comprising a manual control point A, a communicating or non-communicating electrical outlet B, a sensor C, a receiver D or an actuator.

4. Electrical installation according to Claim 3, **characterized in that** the manual control point A is one of the elements included in the group comprising a switch, a push-button, a rotary button and an up/down button.

5. Electrical installation according to Claim 3 or 4, **characterized in that** the function associated with the communicating outlet B is one of the functions included in the group comprising monitoring, automatic control and the function of measuring energy consumption.

6. Electrical installation according to Claim 3, 4 or 5, **characterized in that** the sensor C is one of the elements included in the group comprising a presence sensor, a temperature sensor and a luminosity, humidity or else air quality sensor.

7. Electrical installation according to any one of Claims 3 to 6, **characterized in that** the receiver D is one of the elements included in the group comprising musical ambience, a standby light, touch interfaces, an intercom and a buzzer.

8. Electrical installation according to any one of the preceding claims, **characterized in that** the aforementioned functional block (3) may be controlled locally and/or remotely from a fixed or portable terminal (5).

9. Electrical installation according to any one of the preceding claims, **characterized in that** the aforementioned functional block (3) comprises means for radio or PLC or Ethernet communication with a central box and/or with the electrical switchboard and/or a smartphone (5).

10. Electrical installation according to any one of the preceding claims, **characterized in that** the wall block (2) is implemented on the basis of a conventional standard outlet, the connection elements of which, in the form of pins, have been cut off and replaced by connection clips intended to interact with the so-called second connection elements of the functional block.

11. Electrical installation according to any one of the preceding claims, **characterized in that** the wall block (2) is recessed into a flush-mounted housing (31) of the electrical installation intended to be fixed in the wall, or in one piece with this flush-mounted housing (31).

12. Electrical installation according to any one of the preceding claims, **characterized in that** it comprises the electrical distribution switchboard, and means (5) for the remote monitoring and/or control of the function(s) associated with this or these functional block(s) (3), by the electrician or the occupant, by means of the electrical switchboard (4), of a dedicated box in the building, or directly.

13. Installation according to Claim 12, **characterized in that** it comprises means for the configuration, by the electrician, of the functions of the electrical distribution of the switchboard that are defined on the basis of new applications downloaded from a computerized shop.

14. Installation according to Claim 13, **characterized in that** the aforementioned downloaded functions are one or more of the functions included in the group comprising monitoring, lighting or else heating.

15. Electrical installation according to Claim 13 or 14, **characterized in that** it comprises means for remotely consulting information in relation to these functions for remote diagnosis, and means for communicating information for remote trouble shooting.

16. Electrical installation according to any one of Claims 13 to 15, **characterized in that** it comprises means for remotely configuring warnings and/or access to alarms and faults, and to an archive.

17. Electrical installation according to any one of Claims 13 to 16, **characterized in that** it comprises means for programming scenarios that are adapted to the habits and to the requirements of the occupants.

18. Electrical installation according to any one of the preceding claims, **characterized in that** it is of the single-phase, three-phase or three-phase plus neutral type.
